Europäisches Patentamt

**European Patent Office**

**Office européen des brevets**

(11) Numéro de publication: **0 074 886**

A2

(12) # DEMANDE DE BREVET EUROPEEN

(21) Numéro de dépôt: **82401622.4**

(22) Date de dépôt: **02.09.82**

(51) Int. Cl.³: **B 60 R 1/06**

(30) Priorité: **11.09.81 FR 8117246**

(43) Date de publication de la demande:
**23.03.83 Bulletin 83/12**

(84) Etats contractants désignés:
**DE IT**

(71) Demandeur: **Manzoni, Stéphane**
**1, rue Pasteur**
**F-39200 Saint-Claude(FR)**

(72) Inventeur: **Manzoni, Stéphane**
**1, rue Pasteur**
**F-39200 Saint-Claude(FR)**

(74) Mandataire: **Moulines, Pierre et al,**
**Cabinet BEAU de LOMENIE 55, rue d'Amsterdam**
**F-75008 Paris(FR)**

(54) **Dispositif de commande à distance d'un miroir de rétroviseur pour véhicule.**

(57) Dispositif de commande à distance d'un miroir de rétroviseur comportant un moyen de commande disposé à l'intérieur du véhicule relié par deux câbles de transmission à un moyen d'actionnement du miroir disposé dans le boîtier du rétroviseur situé à l'extérieur du véhicule.

Le moyen de commande comporte un organe de support (1) dans lequel sont montés coulissant parallèlement deux organes de transmission (5) reliés chacun à un câble de transmission (10, 11), l'un des organes de transmission (5) présentant une lumière (14) située dans un plan perpendiculaire à son axe de coulissement et dans laquelle est engagée une extrémité (15) d'un levier de manoeuvre (17) articulé sur une tige (20) montée pivotante dans l'organe de support (1).

L'invention est utilisée pour la commande d'un rétroviseur.

EP 0 074 886 A2

Dispositif de commande à distance d'un miroir de rétroviseur pour véhicule.

La présente invention a pour objet un dispositif de commande à distance d'un miroir de rétroviseur pour véhicule.

Sur certains véhicules automobiles, notamment les plus perfectionnés, il est prévu de monter, du côté du passager, un rétroviseur à commande par moteur électrique. Toutefois, en raison du prix élevé d'un tel mécanisme, il ne peut être envisagé d'en équiper les véhicules d'un modèle courant.

Par ailleurs, les dispositifs de commande mécanique mécanique connus dans lesquels on utilise trois câbles de transmission ne transmettent pas fidèlement le mouvement au miroir en raison de la longueur trop importante des organes de transmission.

La présente invention a pour objet un dispositif de commande perfectionné comportant un moyen de commande disposé à l'intérieur du véhicule relié par deux câbles de transmission à un moyen d'actionnement du miroir disposé dans le boîtier du rétroviseur à l'extérieur du véhicule.

Conformément à la présente invention, le boîtier du rétroviseur renferme un organe de support sur lequel est articulée suivant un axe vertical une entretoise portant à l'avant, suivant un axe d'articulation horizontal, un support de miroir et étant articulée à l'arrière sur l'extrémité de l'un des câbles de transmission, ledit support comportant un axe sur lequel est articulé dans sa partie centrale un levier coudé dont l'une des extrémités est reliée à l'un des câbles de transmission et dont l'autre extrémité est reliée par un doigt articulé au support de miroir suivant un point décalé par rapport à l'axe d'articulation horizontal du support de miroir sur l'entretoise.

Dans le dispositif suivant l'invention, on utilise un moyen de commande et un moyen d'actionnement présentant une cinématique simple, de manière à permettre la commande du miroir d'une façon fiable, fidèle et avec un coût peu élevé. Ce dispositif peut être utilisé pour le rétroviseur du côté passager, sur l'aile avant gauche ou droite d'un véhicule de type courant.

D'autres caractéristiques et avantages de l'invention seront mieux compris à la lecture de la description qui va suivre d'un mode de réalisation et en se référant aux dessins annexés, sur lesquels :

- la figure 1 est une vue en élévation d'un mode de réalisation du moyen de commande à levier suivant l'invention;

- la figure 2 est une vue en coupe suivant la ligne II-II de la figure 1;

- la figure 3 est une vue en coupe suivant la ligne III-III de la figure 2;

- la figure 4 est une vue en coupe suivant la ligne IV-IV de la figure 1;

- la figure 5 est une vue du moyen de commande suivant la flèche V de la figure 2;

- la figure 6 est une vue en perspective de l'un des organes de manoeuvre coulissant;

- la figure 7 est une vue en élévation du boîtier de rétroviseur, le miroir étant enlevé pour montrer le mécanisme;

- la figure 8 est une vue en coupe suivant la ligne VIII-VIII de la figure 7;

- la figure 9 est une vue en coupe suivant la ligne IX-IX de la figure 7; et

- la figure 10 est une vue en coupe suivant la ligne X-X de la figure 7.

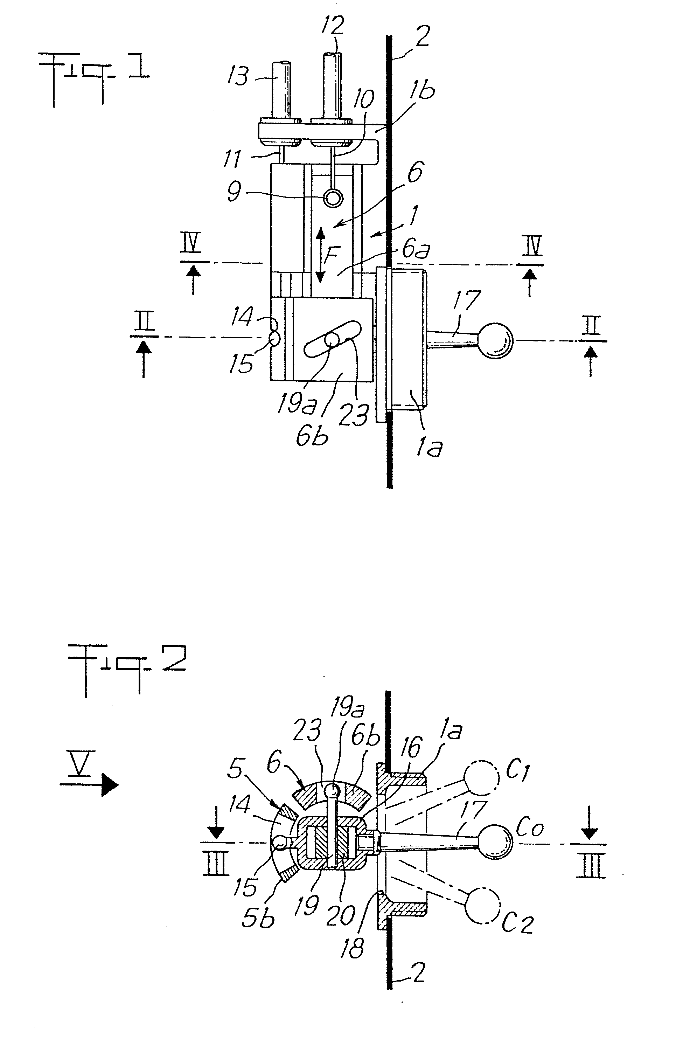

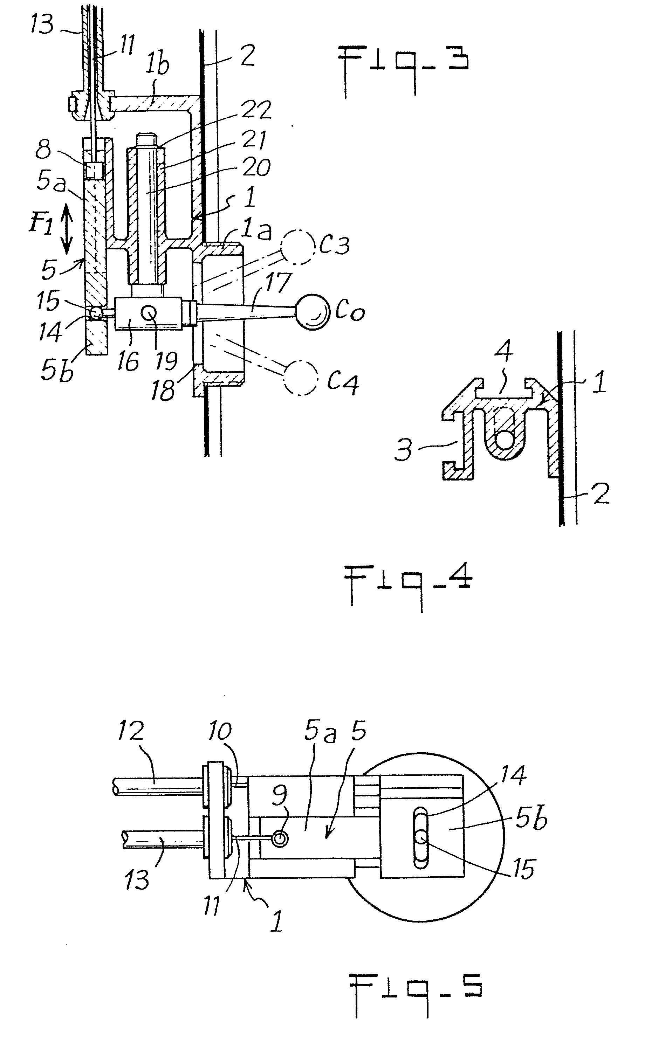

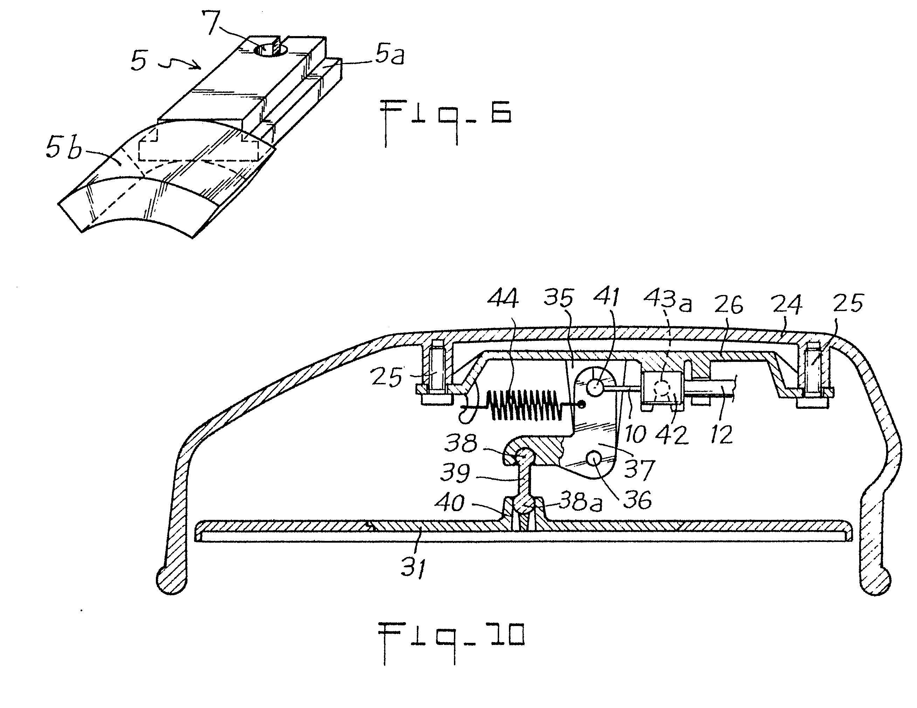

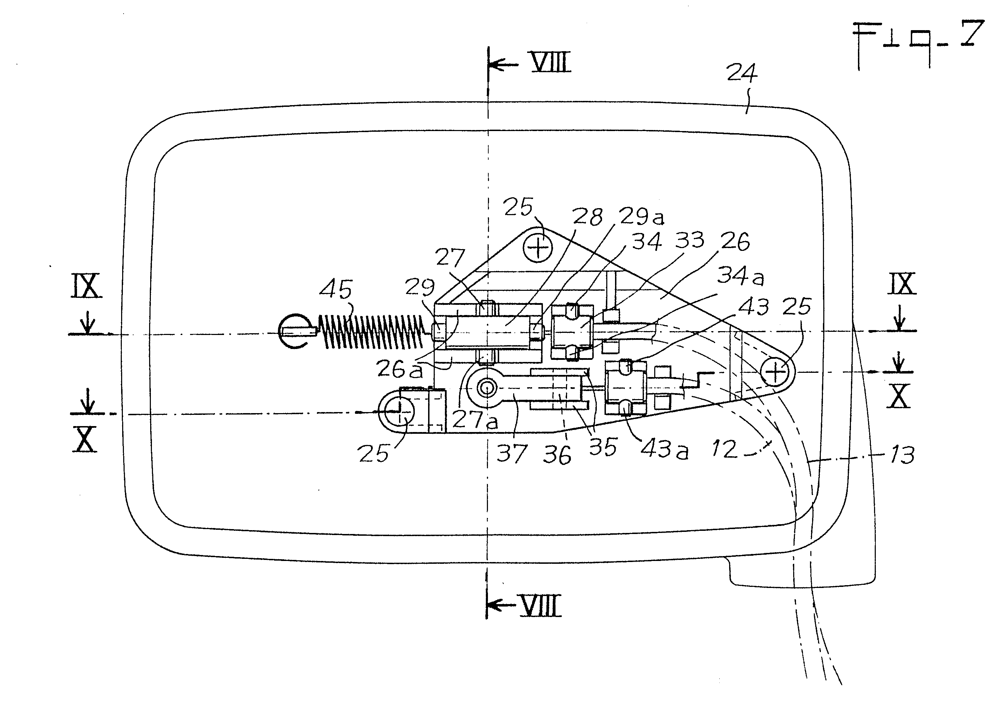

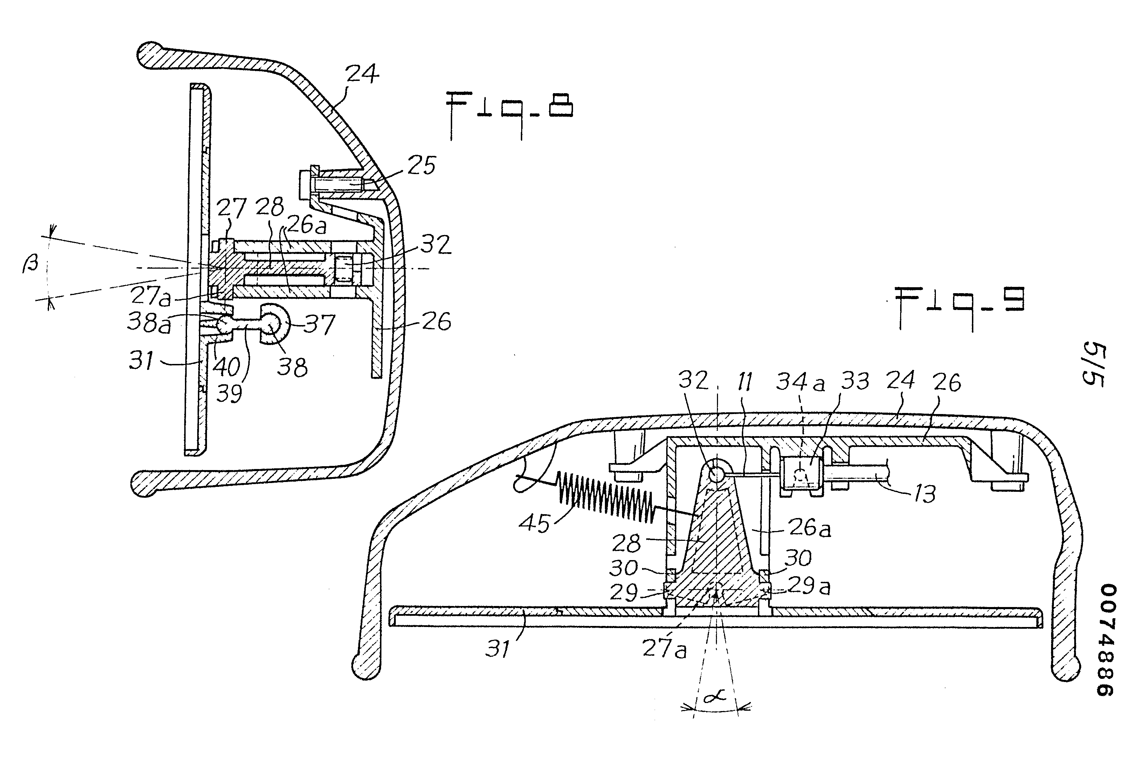

Aux figures 1 à 5, on a représenté un moyen de commande à distance d'un miroir de rétroviseur qui est relié par deux câbles de transmission à un moyen d'actionnement du miroir (figures 7 à 10). Le moyen de commande (figures 1 à 5) comprend un organe de support 1 présentant un prolongement la qui est engagé dans un orifice d'une cloison intérieure 2 du véhicule sur laquelle ledit organe de support est fixé par un moyen connu.

L'organe de support 1 présente deux rainures parallèles 3, 4 disposées suivant deux plans perpendiculaires et dans lesquelles sont montés respectivement des organes de transmission 5, 6 qui présentent chacun une partie rectiligne 5a, 6a (figure 6) montée coulissante dans les rainures 3 et 4, lesdites parties 5a, 6a présentant, à l'une de leurs extrémités, des logements 7 dans lesquels sont engagés des bossages 8, 9 fixés à l'extrémité de câbles de manoeuvre 10, 11 montés coulissants dans des gaines 12, 13 dont l'une des extrémités est fixée sur une patte 1b de l'organe de support.

La partie rectiligne 5a et 6a des organes de transmission est prolongée par des parties curvilignes 5b et 6b. Dans la partie curviligne 5b de l'organe de transmission 5, il est prévu une lumière 14 située dans un plan perpendiculaire à l'axe de coulissement de l'organe de transmission et dans laquelle est engagé un doigt 15 de forme sphérique solidaire d'un étrier 16 sur lequel est fixé un levier de manoeuvre 17 s'étendant par un orifice 18 ménagé dans le prolongement 1a de l'organe de support à travers la cloison 2. Le doigt 15 est disposé suivant le même axe que le levier 17. La chape 16 du levier 17 est montée de façon articulée au moyen d'un axe 19 (figure 2) sur l'extrémité d'une tige 20 montée pivotante dans un palier 21 solidaire de l'organe de support, ladite tige étant maintenue par une rondelle élastique 22 (figure 3). L'axe 19 est disposé perpendiculairement à l'axe de pivotement de la tige 20.

L'axe 19 est prolongé sur l'un de ses côtés par un doigt 19a de forme sphérique qui est engagé dans une lumière 23 ménagée dans la partie curviligne 6b de l'organe de transmission 6, ladite lumière 23 étant inclinée par rapport à un plan perpendiculaire à l'axe de coulissement de l'organe de transmission 6.

Aux figures 7 à 10, on a représenté un boîtier 24 dans lequel est fixé sur le fond au moyen de vis 25 un organe de support 26 se prolongeant vers l'avant par une chape 26a présentant des logements dans lesquels sont montés rotatifs des tourillons 27, 27a d'une entretoise 28 présentant des tourillons 29, 29a qui sont engagés dans des logements correspondants prévus dans une chape 30 prévue sur la face arrière d'un support de miroir 31.

A l'extrémité opposée aux tourillons 27, 27a, l'entretoise 28 comporte un logement dans lequel est engagé un bossage 32 fixé à l'extrémité du câble 11 dont la gaine 13 est en appui contre une butée 33 montée de façon articulée au moyen de tourillons 34, 34a dans des logements prévus sur l'organe de support 26. Il est également prévu sur l'organe de support une chape 35 entre les branches de laquelle est monté pivotant autour d'un axe 36 et dans sa partie centrale un levier coudé 37 dont l'une des extrémités présente un logement hémisphérique dans lequel est engagée une rotule 38 prévue à l'une des extrémités d'un doigt 39 dont l'autre extrémité présente une rotule 38a engagée dans un logement 40 prévu sur la face arrière du support de miroir 31. Le point d'articulation du doigt 39 sur le support de miroir 31 est décalé par rapport à l'axe d'articulation horizontal 29, 29a du support de miroir sur l'entretoise.

A l'autre extrémité du levier 37, il est prévu un logement dans lequel est engagé un bossage 41 fixé à l'extrémité du câble 10 dont la gaine 12 est en appui contre une butée 42 montée de façon articulée au moyen de tourillons 43, 43a dans des logements correspondants prévus sur l'organe de support 26.

Les câbles 10, 11 peuvent être constitués de fils d'acier trempé rigide du type corde à piano, qui sont disposés dans des gaines 12, 13 en matière plastique armées de fil d'acier, mais il est également possible d'utiliser des câbles souples de type courant connu sous le nom de Bowden. Toutefois, dans ce dernier cas, il est nécessaire de prévoir des organes de rappel élastique 44, 45 d'une part, entre le levier 37 et l'organe de support 26 et, d'autre part, entre l'entretoise 28 et le boîtier 24. Dans ce cas, pour vaincre la force de rappel des organes élastiques, il y aurait lieu de prévoir au moins un freinage sur l'articulation du levier de commande 17 ou un freinage sur chacun des organes de transmission 5-6.

Le dispositif suivant l'invention fonctionne de la manière suivante. Lorsque le levier 17 est actionné comme représenté à la figure 2 afin de passer de la position $C_0$ aux positions $C_1$ ou $C_2$, on provoque la rotation de la tige 20 dans le palier 21 de telle sorte que le doigt 15 se déplace dans la lumière 14 sans entraîner l'organe de transmission 5. Par contre, le déplacement du doigt 19 dans la rainure inclinée 23 provoque le coulissement de l'organe de transmission 6 suivant la double flèche F dans la rainure 4 et l'entraînement du câble 10.

A son autre extrémité 41 dans le boîtier 24, le câble 10 agit sur le levier coudé 37 qui pivote autour de son axe 36, assurant ainsi par l'intermédiaire du doigt 39 le déplacement du porte-miroir autour de l'axe horizontal matérialisé par les tourbillons 29, 29a suivant un angle β et le déplacement ciel-terre du miroir.

Lorsque le levier 17 est actionné comme représenté à la figure 3 afin de passer de la position $C_0$ aux positions $C_3$ ou $C_4$, la tige 20 reste immobile et le levier 17 pivote autour de l'axe 19, de telle sorte que le doigt 15 engagé dans la lumière 14 entraîne l'organe de transmission 5 qui coulisse dans la rainure 3 suivant la double flèche $F_1$. L'organe de transmission 5 étant solidaire de l'une des extrémités du câble 11, il entraîne ce dernier en translation. A son autre extrémité 32 dans le boîtier 24, le câble 11 agit sur l'entretoise 28 qui pivote autour des tourillons 27, 27a assurant ainsi le déplacement du porte-miroir 31 autour d'un axe vertical suivant un angle α et le déplacement gauche droite du miroir.

Bien entendu, l'invention n'est pas limitative et l'homme de l'art pourra y apporter des modifications sans sortir pour cela du domaine de l'invention.

REVENDICATIONS

-------------------------------

1.    Dispositif de commande à distance d'un miroir de rétroviseur comportant un moyen de commande disposé à l'intérieur du véhicule relié par deux câbles de transmission à un moyen d'actionnement du miroir disposé dans le boîtier du rétroviseur situé à l'extérieure du véhicule, caractérisé en ce que, dans le boîtier du rétroviseur, est monté un organe de support (26) sur lequel est articulée suivant un axe vertical (27, 27a) une entretoise (28) portant à l'avant, suivant un axe d'articulation horizontal (29, 29a), un support de miroir (31) et étant articulée à l'arrière sur l'extrémité de l'un des câbles (11) de transmission, ledit support (26) comportant un axe (36) sur lequel est articulé dans sa partie centrale un levier coudé (37) dont l'une des extrémités est reliée à l'un des câbles (10) de transmission et dont l'autre extrémité est reliée par un doigt articulé (39) au support de miroir (31) suivant un point décalé par rapport à l'axe d'articulation horizontal (29, 29a) du support de miroir sur l'entretoise (28).

2.    Dispositif suivant la revendication 1, caractérisé en ce que des organes de rappel élastique (44, 45) sont disposés dans le boîtier entre le levier (37) et l'entretoise (28) de commande du miroir et le boîtier (24).

3.    Dispositif suivant la revendication 1, caractérisé en ce que le moyen de commande comporte un organe de support (1) dans lequel sont montés coulissants parallèlement deux organes de transmission (5, 6) reliés chacun à un câble de transmission (10, 11), l'un des organes de transmission (5) présentant une lumière (14) située dans un plan perpendiculaire à son axe de coulissement et dans laquelle est engagée une extrémité (15) d'un levier de manoeuvre (17) articulé sur une tige (20) montée pivotante dans l'organe de support (1), ledit levier (17) étant articulé suivant un axe (19) perpendiculaire à l'axe de pivotement de la tige (20) et l'autre organe de transmission (6) présentant une lumière inclinée (23) par rapport à un plan perpendiculaire à l'axe de coulissement de l'organe de transmission (6) et dans laquelle est engagé un doigt (19a) solidaire du levier (17) de manoeuvre et disposé suivant un axe perpendiculaire à l'axe dudit levier (17).

4.     Dispositif suivant la revendication 3, caractérisé en ce que les deux organes de transmission (5, 6) sont montés coulissants dans des rainures (3, 4) de l'organe de support (1) dont les axes sont parallèles à l'axe de pivotement de la tige (20) portant le levier de manoeuvre (17).

5     Dispositif suivant les revendications 3 et 4, caractérisé en ce que chaque organe de transmission (5, 6) présente une partie rectiligne (5a, 6a) montée coulissante dans la rainure (3, 4) de l'organe de support (1) et une partie curviligne (5b, 6b) dans laquelle est prévue la lumière (14, 23) de guidage d'un doigt.

6.     Dispositif suivant la revendication 3, caractérisé en ce que le levier de manoeuvre (17) est fixé sur un étrier (16) prolongé du côté opposé au levier (17) et coaxialement à celui-ci par un doigt (15) engagé dans la lumière (14) d'un organe de transmission, ledit étrier (16) étant engagé sur l'extrémité de la tige pivotante (20) au moyen d'un axe d'articulation (19) perpendiculaire à l'axe du levier(17) et qui se prolonge par un doigt (19a) engagé dans la lumière inclinée (23) de l'organe de transmission (6).

7.     Dispositif suivant l'une quelconque des revendications 1 à 5, caractérisé en ce que les câbles (10, 11) sont rigides et constitués notamment de fil d'acier traité montés dans une gaine.

8.     Dispositif suivant l'une quelconque des revendications 1 à 5, caractérisé en ce que les câbles (10, 11) de transmission sont relativement souples et disposés dans une gaine.

9.     Dispositif suivant la revendication 8, caractérisé en ce qu'au moins un organe de freinage est monté sur l'articulation du levier de commande (17).

10.     Dispositif suivant la revendication 8, caractérisé en ce qu'un organe de freinage est prévu pour obtenir le freinage de chacun des organes de transmission (5-6).

0074886

# Fig. 1

F

IV —— IV

II —— II

13  12  10  1b
11  9  6  1  6a
14  15  19a  23  6b  1a  17

# Fig. 2

V

23  19a
5  6  6b  16  1a
14  C1
15  17  Co
5b  19  20  18  C2
2

0074886

Fig-3

Fig-4

Fig-5

Fig_6

Fig_10

Fig-7

Fig. 8

Fig. 9

5/5

0074886